(19) Europäisches Patentamt
European Patent Office
Office européen des brevets

(11) Publication number: 0 240 302 A2

(12) # EUROPEAN PATENT APPLICATION

(21) Application number: 87302775.9

(22) Date of filing: 31.03.87

(51) Int. Cl.[4]: C 08 L 79/08

(30) Priority: 01.04.86 US 846763

(43) Date of publication of application: 07.10.87 Bulletin 87/41

(84) Designated Contracting States: DE FR GB NL

(71) Applicant: CELANESE CORPORATION
1211 Avenue of the Americas
New York New York 10036 (US)

(72) Inventor: Chenevey, Edward C.
185 Martins Way
North Plainfield, New Jersey (US)

Powers, Edward J.
3501 Haverstick Place
Charlotte, North Carolina (US)

Ward, Bennett C.
7932 Park Vista Circle
Pineville, North Carolina (US)

(74) Representative: De Minvielle-Devaux, Ian Benedict Peter et al
CARPMAELS & RANSFORD 43, Bloomsbury Square
London WC1A 2RA (GB)

(54) **Aromatic polybenzimidazole and aromatic polyimide compositions and processes of manufacture.**

(57) A solvent-free homogenous blended composition comprising 25-40 weight percent polybenzimidazole having an IV in the range of 0.7 to 1.2 and a plugging value greater than 5 and correspondingly 75-60 weight percent polyimide, said composition having a high resistance to solvent.

EP 0 240 302 A2

**Description**

AROMATIC POLYBENZIMIDAZOLE AND AROMATIC POLYIMIDE COMPOSITIONS AND PROCESSES OF MANUFACTURE

This invention relates to novel compositions comprising an aromatic polybenzimidazole and an aromatic polyimide and methods for manufacturing such compositions. The novel compositions are suitable for the formation of fibers, fibrids, compression molded articles and films.

Background of the Invention

High molecular weight polybenzimidazoles are polymers of high thermal stability and excellent resistance to oxidative or hydrolytic degradation, which can be formed into shaped articles such as fibers and films having very desirable physical properties. As taught by the published literature, these polymers may be prepared, for example, by melt polymerizing an aromatic tetraamine and a diphenylester or an anhydride of an aromatic or heterocyclic dicarboxylic acid in a one or two stage process; see, for example H. Vogel and C. S. Marvel, Journal of Polymer Science, Vol. L, pages 511-539 (1961); and U.S. Patents Nos. Re. 26,065; 3,174,947; 3,509,108; 3,551,389; 3,433,772; and 3,655,632. In particular, U.S. Patent No. 3,551,389 discloses a two stage process for the production of aromatic polybenzimidazoles, in which the monomers are heated at a temperature above 170°C. in a first stage melt polymerization zone until a foamed prepolymer is formed. The foamed prepolymer is cooled, pulverized, and introduced into a second stage polymerization zone where it is heated again to yield a polybenzimidazole polymer product.

It has also been known to prepare polybenzimidazoles from the free dicarboxylic acids or the methyl esters of such acids rather than the phenyl esters or anhydrides in a melt polymerization process. Polybenzimidazoles produced utilizing certain dicarboxylic compounds as monomers have repeating units of the following formula:

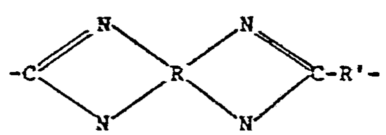

wherein R is a tetravalent aromatic nucleus with the nitrogen atoms forming the benzimidazole rings being paired upon adjacent carbon atoms, i.e., ortho carbon atoms, of the aromatic nucleus, and R′ is a member of the class consisting of an aromatic ring; an alkylene group (preferably having 4 to 8 carbon atoms); and a heterocyclic ring such as pyridine, pyrazine, furan, quinoline, thiophene, and pyran. Depending on whether the dicarboxylic acid moieties in the dicarboxylic monomer component are the same or different, R′ may be the same or randomly different among the repeating units along the polymer chain. Moreover, depending on whether one or more than one tetraamine monomer is utilized in the polymerization, R may also be the same or randomly different along the polymer chain.

The following generalized equation illustrates the condensation reaction which occurs in forming the polybenzimidazoles having the recurring units of the foregoing formula:

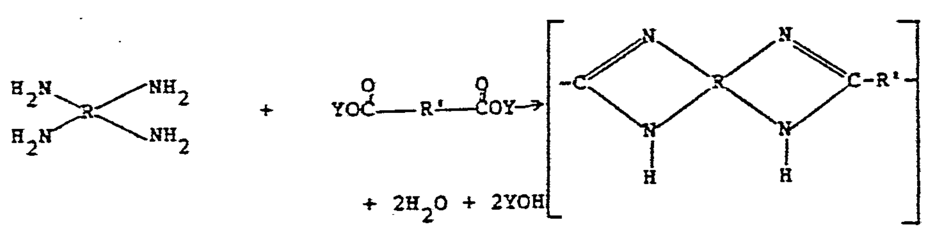

in which R, R′ and Y are as previously defined. Such polybenzimidazoles are produced by the reaction of a mixture of (1) at least one aromatic tetraamine containing two groups of amine substituents, the amine substituents in each group being in an ortho position relative to each other, and (2) a dicarboxylic component as indicated in the foregoing equation and as more completely defined hereinafter.

Aromatic tetraamines which may be used, for example, are those with the following formulas:

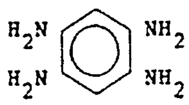

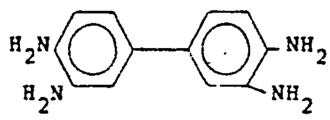

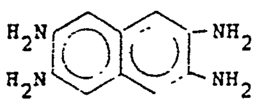

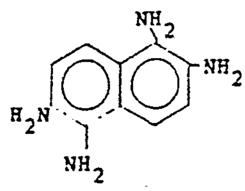

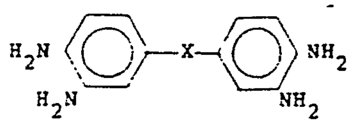

where X represents -O-, -S-, $-SO_2$, -C-, or a lower alkylene group, such as $-CH_2-$, $-(CH_2)_2-$, or $-C(CH_3)_2-$. Among such aromatic tetraamines may be mentioned, for example, 1,2,4,5-tetraaminobenzene; 1,2,5,6-tetraaminonaphthalene; 2,3,6,7-tetraaminonaphthalene; 3,3′,4,4′-tetraaminodiphenyl methane; 3,3′,4,4′-tetraaminodiphenyl ethane; 3,3′,4,4′-tetraaminodiphenyl-2,2-propane; 3,3′,4,4′-tetraaminodiphenyl thioether; and 3,3′,4,4′-tetraaminodiphenyl sulfone. The preferred aromatic tetraamine is 3,3′,4,4′-tetraaminobiphenyl.

The compounds which comprise the dicarboxylic component of this invention are defined by the formula:

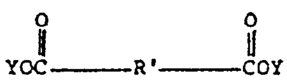

in which the Y's may be hydrogen, aryl or alkyl with no more than 95% of the Y's being hydrogen or phenyl. The dicarboxylic component may therefore consist of a mixture of a free acid with at least at one diester and/or monoester; a mixture of diester(s) and/or monoester(s); or a single dialkyl ester, monoester or mixed aryl-alkyl or alkyl/alkyl ester but can consist completely of free acid or diphenyl ester. When Y is alkyl, it preferably contains 1 to 5 carbon atoms and is most preferably methyl. When Y is aryl, it may be any monovalent aromatic group obtained by filling with hydrogen all the valences but one of the aromatic groups which may be R or R′ as disclosed previously, either unsubstituted or substituted with any inert monovalent radical such as alkyl or alkoxy containing 1 to 5 carbon atoms. Examples of such aryl groups are phenyl, naphthyl, the three possible phenylphenyl radicals and the three possible tolyl radicals. The preferred aryl group is usually phenyl.

The dicarboxylic acids which are suitable in free or esterified form as part of the dicarboxylic component as previously described for use in the production of polybenzimidazoles by the process of the present invention include aromatic dicarboxylic acids; aliphatic dicarboxylic acids (preferably, those having 4 to 8 carbon atoms); and heterocylic dicarboxylic acids wherein the carboxylic groups are substituents upon carbon atoms in a ring compound such as pyridine, pyrazine, furan, quinoline, thiophene, and pyran.

Dicarboxylic acids which may be utilized in free or esterified form as described are aromatic dicarboxylic acids such as those illustrated below:

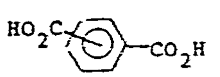

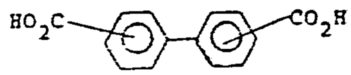

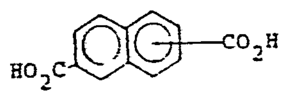

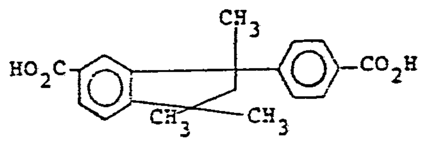

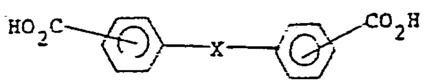

where X is as defined above. For example, the following diacids can suitably be employed: isophthalic acid; terephthalic acid; 4,4′-biphenydicarboxylic acid; 1,4-naphthalene-dicarboxylic acid; diphenic acid (2,2′-biphenyldicarboxylic acid); phenylindandicarboxylic acid; 1,6-napthalenedicarboxylic acid; 2,6-naphthalenedicarboxylic acid; 4,4′-diphenyletherdicarboxylic acid; 4,4′-diphenylsulfonedicarboxylic acid; 4,4′-diphenylthioetherdicarboxylic acid. Isophthalic acid is the dicarboxylic acid which in free or esterified form is most preferred for use in the process of the present invention.

The dicarboxylic component can be one of the following combinations: 1) at least one free dicarboxylic acid and at least one diphenyl ester of a dicarboxylic acid; 2) at least one free dicarboxylic acid and at least one dialkyl ester of a dicarboxylic acid, and 3) at least one diphenyl ester of a dicarboxylic acid and at least one dialkyl ester of a dicarboxylic; and 4) at least one dialkyl ester of a dicaroxylic acid. The dicarboxylic moieties of the compounds of each combination may be the same or different and the alkyl groups of the alkyl esters of combinations 2), 3) and 4) generally contain 1 to 5 carbon atoms and are most preferably methyl.

The dicarboxylic component can be employed in a ratio of about 1 mole of total dicarboxylic component per mole or aromatic tetraamine. However, the optimal ratio of reactants in a particular polymerization system can be easily determined by one of ordinary skill in th art.

Examples of polybenzimidazoles which may be prepared according to the process as described above include:
poly-2,2′-(m-phenylene)-5,5′-bibenzimidazole;
poly-2,2′-(biphenylene-2″2‴)-5,5′-bibenzimidazole;
poly-2,2′-(biphenylene-4″4‴)-5,5′-bibenzimidazole;
poly-2,2′-(1″,1″,3″trimethylindanylene-3″5″-p-phenylene-5,5′-bibenzimidazole;
2,2′-(m-phenylene)-5,5′-bibenzimidazole/2,2-(1″,1″,3″-trimethylindanylene)-5″,3″-(p-phenylene)-5,5′-bibenzimidazole copolymer;
2,2′-(m-phenylene)-5,5-bibenzimidazole2,2′-biphenylene-2″,2‴)-5,5′-bibenzimidazole copolymer;
poly-2,2′-(furylene-2″,5″)-5,5′-bibenzimidazole;
poly-2,2′-(naphthalene-1″,6″)-5,5′-bibenzimidazole;
poly-2,2′-(naphthalene-2″,6″)-5,5′-bibenzimidazole;
poly-2,2′-amylene-5,5′-bibenzimidazole;
poly-2,2′-octamethylene-5,5′-bibenzimidazole;
poly-2,2′-(m-phenylene)-diimidazobenzene;
poly-2,2′-cyclohexenyl-5,5′-bibenzimidazole;
poly-2,2′-(m-phenylene)-5,5′-di(benzimidazole) ether;
poly-2,2′-(m-phenylene)-5,5′-di(benzimidazole) sulfide;
poly-2,2′-(m-phenylene)-5,5′-di(benzimidazole) sulfone;
poly-2,2′-(m-phenylene)-5,5′-di(benzimidazole) methane;
poly-2,2″-(m-phenylene)-5,5″-di(benzimidazole) propane-2,2;
and
poly-ethylene-1,2-2,2″-(m-phenylene)-5,5″-dibenzimidazole) ethylene-1,2
where the double bonds of the ethylene groups are intact in the final polymer.

Poly-2,2′-(m-phenylene)-5,5′-bibenzimidazole, a preferred polymer, can be prepared by the reaction of 3,3′,4,4′-tetraaminobiphenyl with a combination of isophthalic acid with diphenyl isophthalate or with a dialkyl isophthalate such as dimethyl isophthalate; a combination of diphenyl isophthalate and a dialkyl isophthalate such as dimethyl isophthalate; or at least one dialkyl isophthalate such as dimethyl isophthalate, as the sole dicarboxylic component.

The aromatic polyimides of this invention are those which are capable of being dissolved in the solvent used to dissolve the polybenzimidazole and comprise a series of engineering thermoplastics. For relatively inexpensive polymers, they have high heat resistance, high strength-to-weight ratio, high modulus, excellent

flammability characteristics and processability on conventional molding equipment, low smoke evolution, high dielectric strength and stable dielectric constant and dissipation factor over a wide range of temperatures and frequencies. They have generally good resistance to chemicals with the exception of chlorinated solvents, ethylene glycol antifreeze, brake fluid and dimethylformamide, among others. However, the utility of the aromatic polyimides is severely limited in special applications such as in the aerospace industry, where resistance to paint strippers such as methylene chloride is required.

A preferred class of polyimides are the polyetherimides with one class of polyetherimides available from General Electric under the trade name of Ultem. Procedures for synthesizing aromatic polyetherimides are fully described by White et al [D. M. White et al, J. Polymer Sci. - Chem 19, 1635 (1981)]. The reaction [T. Takekoshi et al, ACS preprint, 20(1), Honolulu 1979; D. M. White, U.S. Patent Nos. 4,324,883; 4,324,884; 4,324,885; 4,330,666 (1982)] involves a two-step displacement polymerization: (1) cyclization and (2) displacment [T. Takekoshi et al, ACS preprint, 20(1), Honolulu (1979)]. Either one of the two steps can proceed before the other. For example, a diamine may be first reacted (cyclization) with 3- or 4- nitrophthalic anhydride (the 3-position is more reactive than the 4-position) to form disubstituted bisnitroimide which is subsequently subjected to nitrodisplacement polymerization with alkali metal salts of various bisphenols. Several methods can be used to generate the dianion. For example, the dianion of bisphenol may be prepared by adding sodium hydroxide or sodium methoxide to bisphenol A under anhydrous conditions. The polymerization step generally proceeds rapidly under relatively mild conditions in dipolar aprotic solvents or in a mixture with toluene to form high molecular weight products. By varying the nature of the diamine and the position of substitution in the bis-imides and using different bisphenols, a large number of aromatic polyetherimides with a wide range of physical properties can be prepared [D. M. White et al, J. Polymer Sci. - Chem 19, 1635 (1981)]

## Summary of Invention

By the invention novel substantially solvent-free homogeneous blended compositions are prepared which are highly solvent resistant, highly resistant to flame embrittlement, and have high single glass transition temperature. Such compositions are particularly useful in the fabrication of fibers, fibrids, compression molded articles and films. It has been discovered that such novel compositions comprising from 25-40 weight percent polybenzimidazole and correspondingly 75-60 weight percent polymide retain the desirable characteristics of the polyimide while acquiring the above-described desirable characteristics. Preferably, the polyimide is polyetherimide and the polybenzimidazole has specific properties as subsequently defined.

## Description of Preferred Embodiment

The substantially homogeneous polybenzimidazole/polyimide blends or alloys of this invention will contain a concentration of 25-40, preferably 30-40 weight percent of polybenzimidazole. The polybenzimidazole employed in forming the composition will have an intrinsic viscosity (IV) of about 0.7 to 1.2 deciliters per gram when measured at a concentration of 0.4 gram of polymer in 100 ml of 97% $H_2SO_4$ at 250° C and a plugging value of greater than 5 as measured by forming a 6.0 weight percent solution of the polymer in dimethyl acetamide containing 2.0 weight percent lithium chloride and filtering the solution at 25° C and 1 atmosphere pressure through a Gelman Type A glass paper filter. The plugging value, which is the number of grams of polymer solution filtered per unit area in infinite time, is expressed in grams of polymer per square centimeter. The novel compositions will have a solvent concentration of less than 0.1 weight percent, a single glass transition temperature (Tg) of at least 270° C being typical of a polymer alloy, and will have a high resistance to solvent as determined by immersing the composition in methylene chloride for 100 hours at 25° C. The novel compositions under such conditions will retain at least 90% of its properties as measured prior to immersion.

In the preparation of the compositions and articles of manufacture of this invention, the above-described polybenzimidazole and polyimide polymers can be separately prepared in solution at low to high solids concentrations. Useful solvents include N,N-dimethylacetamide, N,N-dimethylformamide, N-methylpyrrolidone, dimethylsulfoxide and other polar aprotic solvents. Acids such as anhydrous sulfuric or phosphoric can also be employed but care must be taken to avoid chemical degradation of the polyimide in the use thereof and a step must be added to neutralize residual acid after coagulation of the polymer blend. Preferably, the solution of polybenzimidazole will be mixed with the solution of polyimide at solids levels between 10% and 40%, more preferably solutions of 15% to 30% by weight solids will be employed. Generally, the solution of polyimide will be at somewhat higher solids concentration than the polybenzimidazole as polyimide viscosities tend to be lower than polybenzimidazole viscosities at the same solids level.

Solution mixing of the blends can be conducted on a batch basis with high shear mixers or continuously, by feeding streams of solutions of the two polymers through static mixers. In preparing the solutions of the polymers, the polybenzimidazole and polyimide polymers can be thoroughly dried to remove moisture and separately mixed with a solvent and optionally, a stabilizer, and the resulting mixture stirred and heated. Suitable stabilizers include lithium chloride and other agents which promote stability of the solution during storage. With respect to the solution of polybenzimidazole it is desirable to heat the mixture of polymer, stabilizer and solvent to a temperature above the boiling of the solvent in a pressure reactor to effect complete solution. Alternatively, the solid dry polybenzimidazole and polyimide polymers can be mixed with a solvent and a stabilizer with stirring and heating, preferably at temperatures above the boiling point of the solvent in a pressure reactor to obtain a solution blend in one step.

A second method of blending the polybenzimidazole and polyimide polymers comprises separately mixing

each of the polymers with a solvent to provide a mixture comprising 40 to 90 percent solids and thereafter mixing the solvent swollen polymers on a mill or other device typically used to blend high viscosity materials with the application of heat. A blend of the polymers could also be obtained by mixing the solid polyimide polymer with a solution of the polybenzimidazole polymer or a solution of the polyimide polymer with the solid polybenzimidazole and the resulting mixture masticated.

A further method of preparing a blend of the polybenzimidazole and polyimide polymers comprises melt mixing solid dry mixtures of the polybenzimidazole and polyimide polymers in devices such as heated screw mixers that provide efficient mixing and heating with very short residence times so as to minimize degradation of the polymers at the very high temperatures required. Preferably, under such circumstances small particles of the two polymers are employed. The polyimide polymer can also be coated on small particles of the polybenzimidazole polymer from a volatile solvent for the polyimide which is not a solvent for polybenzimidazole. Solvents such as chloroform or methylene chloride will dissolve polyetherimide, for example, and can be easily evaporated before melt blending the two polymers. Extrudate from the above-described melt mixing process and comprising a blend of the polybenzimidazole and polyimide polymers with the concentration of polybenzimidazole ranging from 25-40 weight percent, can be in the form of fiber, film, fibrids, shaped articles or pellets for subsequent processing.

In the production of fibers from a mixed solution of the polybenzimidazole and polyimide polymers, the solution or dope can be heated to decrease the viscosity and then filtered to remove particulate matter. The filtered dope can then be heated to a temperature in the range of 150 to 200°C, metered to a spinnerette through conventional dry spinning type gear pumps and extruded through spinnerette holes. The extrudate can be quenched, for example, by a column of nitrogen maintained at a temperature in the range of 180-250°C and higher.

It is critical to the invention to remove all solvent from the product fiber as residual solvent will cause bubbles and voids when subsequently processed at elevated temperatures. Thermal means are incapable of removing all of the dimethyl acetamide solvent, for example, from the fiber. Water or steam can be effective in the removal of solvent and multiple washing steps may be required. The product blends must be substantially solvent-free, having less than 0.1 weight percent solvent. A preferred washing method comprises the five-stage countercurrent washing of the fibers with 95°C water at the flow rate of 1 gallon per minute per pound of fiber with a 1 minute residence time in each stage.

The washed fiber is dried. Temperatures in excess of 150°C are necessary to drive moisture from the fiber. Unless protected from air, the product will pickup or regain moisture to an equilibrium value dependent on the concentration of polybenzimidazole in the fiber. Polybenzimidazole has a relatively high moisture regain of about 14.0 weight percent whereas Ultem, for example, has a moisture regain of only 2.0 weight percent.

The spun, washed and dried fiber has a low strength and modulus but a high elongation and is particularly suitable for fabrication into a scrim structure for subsequent bonding to other matrices by a combination of temperature and pressure. The fiber can also be crimped, cut into staple lengths, or employed as a long tow.

If a stronger or stiffer fiber with less elongation is required, the product fiber can be drawn to orient the fiber using a temperature equal to or above the glass transition temperature (Tg) of the polymer alloy. Drawing temperatures between 217 and 450°C can be employed with a draw ratio of 2-5:1. Drawing should be performed in an inert atmosphere such as nitrogen. A fiber prepared as described above having a composition containing 30 weight percent polybenzimidazole and drawn at a temperature of 310°C with a draw ratio of 3:1 will have a tenacity of at least 3.5 grams per denier at 25°C, an elongation of at least 25%, a modulus of at least 65 grams per denier at 25°C and a glass transition temperature of 285°C. The above described properties are determined through the utilization of an Lustron tensile tester (Model TM) using a 3-1/3 inch gauge length and a strain rate of 60 percent per minute in accordance with ASTM D 2256.

In obtaining a polybenzimidazole/polyimide blended composition useful in compression molding applications, the polybenzimidazole/polyimide solution prepared as described above can be poured into a non-solvent such as water, preferably poured slowly into a large volume of water which is being rapidly agitated. A fine particulate polymer powder is obtained which is washed to obtain polybenzimidazole/polyimide polymer particles having a concentration of solvent less than 0.1 weight percent. The particles can be washed with 95°C water in a five-stage washing in a centrifuge, operating for 1 minute in each stage and employing 50 gallons of water per pound of particles. The solvent-free, dried powder, preferably obtained using a polybenzimidazole having an IV in the range of 0.70-0.85, can then be fused under pressure and at an elevated temperature preferably below the glass transition temperature in a mold. When employing a 30/70 polybenzimidazole/polyetherimide blend, a pressure of 2800 psi, and a temperature of 300°C lightweight molded articles having high strength (a tensile strength of 10,000 psi and a high degree of thermal stability (an elongation of less than 2%) as determined by ASTM D 1623, Section 8, and a modulus of 500,000 psi as determined by ASTM D 1043, useful in the aircraft and missile industries can be obtained.

The solid polybenzimidazole/polyimide blended compositions prepared as described above can be melt spun into fibers. The solid blended composition or alternatively each of the solid polymers can be separately metered to the screw of a typical melt spinning machine where the polymer blend is melted or where the polymers are mixed and melted. The molten polymer blend can then be filtered in a conventional manner and forced through a spinerret. As no solvent is involved and only limited cooling is required to produce a strong load bearing structure, small or fine diameter fibers can be obtained from spinnerets with relatively large diameter holes by providing an extensive stretch during an air quench of the extruded fiber. Drawing, crimping

and cutting of the fiber can be performed as described above.

In the preparation of films, the polymer blend can be extruded as described above, with the exception that a slit die is employed, or can be cast from a solution of the polymer blend upon a carrier belt with a doctor blade. The solvent, if present, can be removed by passing the case film through an oven maintained at a temperature in the range of 100-120° C and then immersing the film in water to separate it from the belt and wash out the residual solvent. The washing is continued until the concentration of solvent is less than 0.1 weight percent and can be conducted as described above for the fibers. Drying of the film is conducted under tension to obtain a smooth film. The prepared films can be used as adhesives, as electrical insulation and as high temperature barriers.

In the production of fibrids, a mixed and filtered polybenzimidazole/polyimide solution prepared as described above and containing a solids concentration in the range of 8-12 weight percent can be pumped into an air interruption nozzle, supplied with 15-30 psi air and submerged in water. An aspirated spray can be blown into the water, coagulating fine microfibrils of the polymer blend. The fibrils or fibrids normally ranging from to 2-10 microns in diameter and from 0.1 to 1.5 millimeters (mm) in length can then be dewatered using vacuum filtration or centrifugation and the solvent removed employing previously described procedures. These fibrids are useful in the production of papers.

Preferably, the IV of the polybenzimidazole employed in preparing the film composition will range from 0.9-1.2. With a polybenzimidazole/polyetherimide composition containing 30 weight percent polybenzimidazole, the film will have a tensile strength of at least 12,000 psi, an elongation of at least 40%, a modulus of at least 300,000, each determined in accordance with the test procedures described with respect to the molded articles and a glass transition temperature of 285° C.

In the production of fibrids, a mixed and filtered polybenzimidazole/polyimide solution prepared as described above and containing a solids concentration in the range of 8-12 weight percent can be pumped into an air interruption nozzle, supplied with 15-30 psi air and submerged in water. An aspirated spray can be blown into the water, coagulating fine microfibrils of the polymer blend. The fibrils or fibrids normally range from to 2-10 microns in diameter and from 0.1 to 1.5 millimeters (mm) in length can then be dewatered using vacuum filtration or centrifugation and the solvent removed employing previously described procedures to produce a product containing less than 0.1 weight percent solvent. These fibrids are useful in the production of papers.

Another method of effectively removing solvent from the solvent blended polybenzimidazole/polyimide composition is to employ methanol or water in a first washing step followed by passing the composition through a dilute acid such as 2.0 weight percent solution of sulfuric acid. The composition is then sprayed with water and passed through a dilute alkaline solution such as a solution of ammonium hydroxide, followed by a water washing step. This washing procedure is effective in extracting chlorides such as lithium chloride when employed as a stabilizer for the polybenzimidazole solution.

The following examples are presented to exemplify specific aspects of the invention.

Example I

0.18 pounds of lithium chloride was dried at 120° C for 3 hours and added to 7.8 pounds of dry dimethyl acetamide (DMAc). The mixture was stirred under dry nitrogen until solution was complete. The solution of salt was added, with 2.6 pounds of 0.80 IV polybenzimidazole polymer to a Parr reactor. The polymer had been polymerized in a two step process starting with diphenylisophthalate and tetraaminobiphenyl wherein the polymer formed a foam in the first stage which was crushed and subsequently solid state polymerized. The polymer was redried, after having been stored, by heating it at 120° C for 3 hours under a dry nitrogen sweep. The Parr reactor was pursed several times with dry nitrogen and heated with stirring to 80° C, at which point dry nitrogen pursing was repeated. Pursing was repeated at 120° C to allow moisture to evaporate. The solution was then heated with stirring to 220° C at which temperature it was stirred for two hours under pressure. At this time the heaters were shut off and cold water was passed through cooling coils. At about 120° C, the Parr reactor was vented and a dry nitrogen purse was maintained while the polybenzimidazole solution cooled. This solution is called the polybenzimidazole solution.

6 pounds of GE Ultem 1000 was added to a heated vessel containing 12 pounds of DMAc and the mixture was heated until solution was complete. The mixture was cooled and the above polybenzimidazole solution was added with stirring. Stirring was continued until a single phase was affected after which the solution was passed through two plate and frame filters to remove particulate matter. This solution is called the filtered alloy solution.

The above procedure was repeated using 1.0 IV polybenzimidazole polymer which was dissolved in a total of 10.4 pounds of DMAc. The solution, after blending with the Ultem solution, is called the 1.0 IV filtered alloy solution.

The filtered alloy solution, as prepared above, is moved by gear pump from a nitrogen purged pressure bottle through heated tubing to raise its temperature to 100° C after which it is passed through a candle filter. From there the solution is passed through additional heaters to raise the temperature of the solution to 175° C and finally through a spinnerette containing two hundred 75 um holes. The extruded filaments are allowed to fall in a cabinet having a 250° C nitrogen downdraft. Fiber at the bottom of the cabinet has a 23% solvent content. The solvent containing fiber is passed through a water spray and then through five wash chambers with counter current water flows, at the end of which, the solvent content of the fiber is less than 1.0%.

The washed fiber is dried by passing it through a hot tube heated to 135° C with a nitrogen flow and taken up

on a package for later use.

The as-spun fiber as prepared above has a tenacity of 1.2 grams per denier, an elongation of 105% and a modulus of 35 grams per denier.

The as-spun fiber, washed and dried as above, is passed through another hot tube at 400° C with a nitrogen positive pressure while the fiber is drawn 2.8:1, after which the drawn continuous filament alloy fiber is wound on a bobbin.

The drawn alloy fiber, as prepared above, has a tenacity of 4.5 grams per denier, an elongation of 20%, a modulus of 80 grams per denier and a moisture regain of 4.5%. When a hose leg, knit out of the fiber is immersed in methylene chloride for one week no noticeable change in appearance occurs.

Continuous filament as-spun alloy fiber as prepared above is wound under tension on a cylindrical metal mandrel, 6 inches long by 2 inches in diameter to a thickness of 1 inch. After heating the filament wound mandrel at 300° C in a vacuum autoclave for 30 minutes, the assembly is removed and allowed to cool. After release from the mandrel, the alloy fiber forms a coherent fused structure. The structure maintains its integrity when it is immersed in methylene chloride for one week.

Continuous filament drawn alloy fiber as prepared above is wound under tension on a cylindrical metal mandrel, 6 inches long by 2 inches in diameter to a thickness of 1 inch. After heating the filament wound mandrel at 375° C in a vacuum autoclave for 30 minutes, the assembly is removed and allowed to cool. After release from the mandrel, the alloy fiber forms a coherent fused structure. The structure maintains its integrity when it is immersed in methylene chloride for one week.

Continuous filament drawn alloy fiber as prepared above is intermingled with continuous filament high strength aromatic polyamide fiber in an air jet device and wound under tension on a cylindrical metal mandrel, 6 inches long by 2 inches in diameter to a thickness of 1 inch. After heating the filament wound mandrel at 410° C in a vacuum autoclave for 30 minutes, the assembly is removed and allowed to cool. After release from the mandrel, the alloy fiber and carbon fiber are found to have formed a coherent fused structure. The structure maintains its integrity when it is immersed in methylene chloride for one week.

Continuous filament as-spun alloy fiber as prepared above is passed through a steam jet and through a crimper and, finally, a cutter to produce a staple fiber 2 inches long with 11 crimps per inch.

Continuous filament drawn alloy fiber as prepared above is passed through a steam jet and through a crimper and, finally, a cutter to produce a staple fiber 2 inches long with 11 crimps per inch.

Drawn alloy fiber staple is sprayed with a finish and converted into a spun yarn by typical processes including opening, carding, drafting and spinning. A 30/2 cc yarn is produced which is woven into a 2 X 1 twill at 7 oz./sq. yd. The fabric has a grab strength of 170 pounds/inch.

Chopped crimped as-spun alloy fiber is opened and random laid in a Rando-Webber machine. 8 X 8 inch sheets of the non-woven fabric are cut and pressed at 300° C and 2000 psi between a plate with a point pattern on 2 mm centers and a smooth silicone rubber coated plate. Under these conditions, the non-woven bonds and has a strength greater than 2 pounds per inch per oz./sq. yd. The non-woven fabric shows no change in appearance when it is soaked in methylene chloride for one week.

One part of 2 inch chopped crimped drawn alloy fiber is intimately blended with 2 parts of 2 inch chopped crimped 100% polybenzimidazole fiber. The fiber blend is carded to form a bat which is needle punched to form a handleable non-woven structure. The structure is heated to 400° C in an oven and immediately passed through a nip roll having a pressure of 2000 pounds per linear inch which melt bonds the structure. Such structures are pliable and have strengths greater than 4 pounds per inch per oz./sq. yd. The non-woven fabric shows no change in appearance when it is soaked in methylene chloride for one week.

The above needle punched bat is a suitable precursor for thermoformed honeycomb structures.

Continuous filament drawn alloy yarn is intermingled through an air jet device with 65% high temperature melt resistant polyimide yarn. It is then passed through an air jet forwarding device that also imposed a static charge and lays the filaments with an area density of 4 ounces per sq. yd. in a random manner on a carrier belt. This random assembly of fibers is heated to 425° C and passed through a nip with 2000 pounds per linear inch pressure to form a stiff non-woven fabric. Fabrics with tensile strengths greater than 5 pounds/inch/oz./sq. yd. are obtained. When the non-woven fabric is soaked in methylene chloride for one week no change in appearance is observed.

A continuous filament web as produced above is passed through a water jet device to mechanically entangle the filaments. Fabrics with tensile strengths greater than 4 pounds/inch/oz./sq. yd. are obtained. Passing the web through an oven at 425° C and immediately passing through nip rolls having 2000 pounds per linear inch, produced fabrics with greater than 7 pounds per inch per oz./per sq. yd. When the non-woven fabric is soaked in methylene chloride for one week no change in appearance is observed.

Example II

The 1.0 IV filtered alloy solution of Example I is pumped to a slit die adjusted to extrude a film 6 mils thick onto a carrier film of polyethyleneterephthalate (PET). The cast alloy solution on the carrier film is then passed through an oven zone with high velocity air heated to 110° C impinged on the cast alloy film. The residence time in the oven zone is adjusted so that the exit film contained less than 24% DMAc. The now partially dried cast alloy film is exposed to a water spray and rolled up. In a separate operation, the alloy film is unwound and split from the carrier film. The carrier film is rolled up and, the cast alloy film is slowly passed through a three wash tank filled with water. Thirty foot sections of cast alloy film are rolled up tightly and taped to maintain tension

and left at room temperature for 7 days. The film is dried for 1 day at 110°C and then reconditioned at 65% relative humidity for 5 days.

Alloy film prepared as above has a tensile strength of 16,500 psi and a breaking elongation of 70%, electrical resistivity of 10 (to the 15) ohm-cm, a moisture content after equilibrating at ambient conditions of 4%. When the alloy film is immersed in a solution of methylene chloride, no change in the physical appearance occurs over a period of two weeks. The film contains less than 0.1% DMAc.

The alloy film accepted an embossed pattern when it is pressed at 450°F and 4000 psi. The film resists methylene chloride.

A 1.5 mil alloy film forms a tough bond between two steel plattens when the steel/film/steel structure is pressed at 300°C and 2000 psi.

A narrow strip of the alloy film is spiral wound on a length of heavy gauge wire and the ends are fastened. When the assembly is heated at 300°C, the alloy film essentially forms a continuous coating on the heavy gauge wire.

The film material draws down on a vacuum testing device heated to 200°C, indicating that the film is suitable for vacuum bag applications.

Example III

Filtered alloy solution as prepared above in Example I is diluted with an equal volume of DMAc and added slowly to a 20 fold volume of rapidly stirring water. The mixture is agitated for 15 minutes yielding a fine powder which contained 1.1% DMAc. The powder is dewatered on a centrifuge and charged to a soxlet type extractor wherein the powder is extracted with methanol for 12 hours producing essentially a DMAc free resin. The resin is predried in a steam oven for 12 hours and in a vacuum oven at 125°C for 12 hours producing an essentially solvent free resin.

The resin is pressed and heated in a 2-1/4 inch circular mold at 270°C and 2800 psi for 20 minutes. A solid disk with a lusterous quality is obtained. The disk is soaked in methylene chloride for 1 week with no apparent change in appearance.

Example IV

Filtered alloy solution as prepared above in Example I is diluted to 12% solids with dry DMAc. The solution is pumped by a Zenith constant volume pump into an air interruption nozzle, supplied with 15-30 psi air and submerged in water. The aspirated spray of polymer alloy solution is blown into the water, coagulating fine ribbon-like microfilbrils that range from 2 to 6 microns wide and from 0.1 to 1.5 mm in length. The fibrils are dewatered in a centrifuge so that they contained 91% water and are stored in air tight containers.

Alloy fibrids as made above are dispersed in water with 1/4 inch cut polybenzimidazole fiber at a total solids content of 1-1/2% with a ratio of alloy fibrid to polybenzimidazole fiber of 30/70. Sufficient dispersion is added to a paper hand sheet casting box to obtain a sheet of paper of 2.5 oz./sq. yd. The paper is dried at 100°C on a smooth hot surface to produce a smooth finish paper having a strip tensile strength greater than 4 pounds per inch.

The above paper is deemed suitable for thermoforming honeycomb structures.

A sheet of paper prepared as above is heated in an oven at 300°C and immediately passed through a nip roll heated to 250°C. A thermobonded paper is obtained that has a strip tensile strength greater than 8 pounds per inch and a moisture regain of 8%. No change in appearance is noted when the paper is soaked in methylene chloride for 1 week.

Alloy fibrids, as made above, are dried in a vacuum oven at 130°C for 12 hours. The dried fibrids are pressed and heated in a 2-1/4 inch circular mold at 270°C and 2800 psi for 20 minutes. A solid disk with a lusterous quality is obtained. The disk is soaked in methylene chloride for 1 week with no change in appearance.

The invention has been described in considerable detail with particular reference to certain preferred embodiments thereof. However, variations and modifications can be effected within the spirit and scope of the invention as described hereinbefore, and as defined in the appended claims.

**Claims**

1. A solvent-free homogenous blended composition comprising 25-40 weight percent polybenzimidazole having an IV in the range of 0.7 to 1.2 and a plugging value greater than 5 and correspondingly 75-60 weight percent polyimide, said composition having a high resistance to solvent.
2. The composition of claim 1 wherein said polyimide is polyetherimide.
3. The composition of claim 2 having a single glass transition temperature of at least 270°C.
4. A fiber having the composition of claim 1.
5. The fiber of claim 4 having a tenacity of at least 3.5 grams per denier at 25°C, an elongation of at least 25%, and a modulus of at least 65 grams per denier at 25°C, and a glass transition temperature of at least 270°C.
6. A film having the composition of claim 1.
7. The film of claim 6 wherein said polyimide is polyetherimide.

8. The film of claim 7 having a tensile strength of at least 12,000 psi, an elongation of at least 40%, and a modulus of at least 300,000 psi.

9. A fibrid having the composition of claim 1.

10. A process which comprises forming a solution of polybenzimidazole and polyimide polymers, and polybenzimidazole having an IV in the range of 0.7 to 1.2 and a plugging value greater than 5 and the concentration of said polybenzimidazole being in the range of 25-40 weight percent of the total polymer concentration in said solution, passing said solution through a spinneret and into a quench zone, withdrawing fibers from said quench zone, and washing the solvent from said fibers so as to obtain fibers highly resistant to solvent and having a concentration of solvent less than 0.1 weight percent.

11. The process of claim 10 wherein said washing comprises a multi-stage countercurrent water washing at an elevated temperature.

12. The process of claim 10 wherein said washing includes contacting the fiber with an acid solution and subsequently with an alkaline solution.

13. A process which comprises forming a solution of polybenzimidazole and polyimide polymers, the polybenzimidazole having an IV in the range of 0.7 to 1.2 and a plugging value greater than 5 and the concentration of said polybenzimidazole being in the range of 25-40 weight percent of the total polymer concentration in said solution, passing the solution into a stirred non-solvent for the polybenzimidazole and polyimide, recovering a polymer blend in particulate form from said non-solvent, and washing said particles so as to obtain a uniform polymer blend of polybenzimidazole and polyimide in particulate form highly resistant to solvent and having a solvent concentration of less than 0.1 weight percent.

14. A process which comprises forming a solution of polybenzimidazole and polyimide polymers, and polybenzimidazole having an IV in the range of 0.7 to 1.2 and a plugging value greater than 5 and the concentration of said polybenzimidazole being in the range of 25-40 weight percent of the total polymer concentration in said solution, passing said solution under air pressure through a nozzle into water, recovering polymer fibrids from said water, and washing said fibrids so as to obtain polybenzimidazole and polyimide blended fibrids highly resistant to solvent and having a solvent concentration of less than 0.1 weight percent.

15. A process which comprises forming a solution of polybenzimidazole and polyimide polymers, the polybenzimidazole having an IV in the range of 0.7 to 1.2 and a plugging value greater than 5 and the concentration of said polybenzimidazole being in the range of 25-40 weight percent of the total polymer concentration in said solution, casting a film from said solution, and water washing the formed film so as to obtain a film highly resistant to solvent and having a solvent concentration of less than 0.1 weight percent.

16. The process of claim 15 wherein said washing comprises a multi-stage countercurrent water washing at an elevated temperature.

17. The process of claim 15 wherein said washing includes contacting the film with an acid solution and subsequently with an alkaline solution.